# EUROPEAN PATENT SPECIFICATION

(11) **EP 2 899 159 B1**
(45) Date of publication and mention of the grant of the patent: **30.05.2018**
(21) Application number: 14382026.4
(22) Date of filing: 28.01.2014
(51) Int. Cl.: C01B 32/15, C01B 32/194, B82Y 40/00

(54) **PROCESS FOR OBTAINING STABLE DISPERSIONS OF AGGREGATES OF GRAPHENIC NANOFILAMENTS IN WATER**
VERFAHREN ZUR GEWINNUNG VON STABILEN WÄSSRIGEN DISPERSIONEN VON AGGREGATEN VON GRAPHENISCHEN NANOFILAMENTEN
PROCESSUS POUR OBTENIR DES DISPERSIONS STABLES D'AGRÉGATS DE NANOFILAMENTS GRAPHÉNIQUES EN SOLUTION AQUEUSE

(43) Date of publication of application: 29.07.2015
(73) Proprietor: Grupo Antolin-Ingenieria, S.A., 09007 Burgos (ES)
(72) Inventor: Merino Sánchez, César, 09007 Burgos (ES); Merino Amayuelas, Mª Pilar, 09007 Burgos (ES); Blanco de la Torre, Santiago, 09007 Burgos (ES)
(74) Representative: Capitán García, Maria Nuria

(56) References cited:
- EP-A1- 2 489 632
- WO-A1-03/106600
- WO-A2-2010/106287
- US-A1- 2013 315 815
- US-B2- 7 300 958
- TIANQUAN LIN ET AL: "Facile and economical exfoliation of graphite for mass production of high-quality graphene sheets", JOURNAL OF MATERIALS CHEMISTRY A, vol. 1, no. 3, 1 January 2013 (2013-01-01) , page 500, XP055133583, ISSN: 2050-7488, DOI: 10.1039/c2ta00518b

## Description

### TECHNICAL FIELD OF THE INVENTION

The present invention relates to a process for obtaining stable dispersions of aggregates of graphenic nanofilaments in water employing only physical means, and to the product obtained from said process intended for use in subsequent applications in industrial processes and products, in order to convey to the same the properties of the graphic nanomaterials.

Thus, the invention relates to a process that does not use added compounds such as dispersants or surfactants, as well as added reagents that modify the chemical structure of the graphenic nanomaterials.

The invention is characterised by the use of a mixture of water and aggregates of graphenic nanofilaments where the structure of the graphenic nanofilaments presents a special configuration in the form of a continuous ribbon with five or fewer graphenic layers, wound in a spiral around and along their main axis.

The invention is characterised by the exposure of the mixture of aggregates of graphenic nanofilaments and water to a process divided into two main stages, a stage consisting of stirring the mixture in order to wet the aggregates of graphenic nanofilaments and a stage consisting of a partial deaggregation and stretching of the aggregates of graphenic nanofilaments of the mixture of the previous stage, in order to increase their total outer surface in contact with the water and to facilitate access of the water to the same and their interaction to prevent their reaggregation.

The invention is characterised by stable dispersions of aggregates of graphenic nanofilaments in water, where the structure of the graphenic nanofilaments has a special configuration in the form of a continuous ribbon with five or fewer graphenic layers, wound in a spiral around and along their main axis.

### OBJECT OF THE INVENTION

Graphenic nanomaterials are formed by structures that comprise graphenic layers configured with different geometries, arrangements and number.

Said graphenic layers comprise, on one hand, graphenic carbons, that is, carbon atoms forming carbon-carbon bonds by sp₂, hybridisation, and on the other hand active carbon atoms that do not form carbon to carbon bonds by sp₂ hybridisation that instead react with other substances that are present during the process for obtaining graphenic nanomaterials.

Graphenic carbons give rise to the structure of the graphic layers, while active carbons appear as imperfections of the graphenic layers and mainly concentrate on the edges of said graphenic layers, known as basal plane edges.

The proportion of graphenic carbons with respect to the total carbons of a graphenic nanomaterial is known as the graphitisation index. In general, the higher this index the greater the predominance of the exceptional properties of graphenic nanomaterials.

On one hand, graphenic carbons are responsible for the exceptional electrical, mechanical and thermal properties of graphenic nanomaterials that make them particularly interesting to industry.

On another hand, the active carbons present in graphenic nanomaterials can be of several types. Depending on the type of active carbons and the proportion in which they are present in the graphenic nanomaterials, they will modify to a greater or lesser extent their properties and behaviour before other substances.

Thus, only some of them are susceptible of modifying their affinity to the substances in their surroundings according to the proportion of active carbons present, thereby determining the affinity between the graphenic nanomaterials and said substances, where said substances can be the medium surrounding the graphenic nanomaterials, the final applications or the graphenic nanomaterials themselves.

As regards the use of the graphenic nanomaterials, dispersions of graphenic nanomaterials in water constitute the best way to convey the outstanding properties of said graphenic nanomaterials to the subsequent applications in processes and products that are compatible with water.

The capacity to transmit said properties to subsequent applications in industrial processes and products will depend on one hand on the uniformity of said dispersions at the time of use, and on the other hand on the stability of the same, at least until the time of obtaining said final applications.

To achieve the intended effect, in order to obtain a uniformity that allows sufficient distribution of the graphenic nanomaterials in subsequent applications in processes and products at the time of use, it is necessary to guarantee that the size of the particles to disperse is not greater than a given value and that said maximum value is maintained over time.

Very small amounts of material suffice to transfer their properties to the final applications, so that the difficulty of obtaining said uniformity in the case of graphenic nanomaterials is even greater.

Due to van der Waals attractive forces, graphenic nanomaterials tend to join naturally into large aggregates that hinder their distribution when attempting to achieve a sufficiently uniform distribution to allow handling them and using them in subsequent applications in processes and products.

These forces are caused by the attraction between nearby graphenic layers that form the structure of the graphenic nanoparticles, and their effect is considerable when these layers are very near each other but falls dramatically when the separation between them increases, reaching a point at which their effect is negligible.

These forces, for example, make the graphenic layers form stacks and are responsible for the tendency of graphenic nanomaterials to form aggregates, due to the affinity between the graphenic layers that form the graphenic nanomaterials.

Therefore, the force of attraction between said graphenic layers depends on the distance between them, and consequently on their shape and relative position.

Thus, the forces of attraction between two nearby nanoparticles will depend on the relative position of their corresponding graphenic layers, the most favourable arrangement being one in which these layers are parallel to each other, in which case the effect of the attractive forces and consequently the tendency to form aggregates is higher, and it will be more difficult to separate the graphenic nanoparticles from each other.

One example of nanomaterials with a strong tendency to aggregate is carbon nanotubes, the structure of which comprises a tubular configuration in which the graphenic layers are wound in parallel about a longitudinal axis, so that as two nearby carbon nanotubes approach each other, they tend to align and minimise the separation between their external graphenic layers, such that the attraction between said adjacent carbon nanotubes is high.

In general, two nearby graphenic nanoparticles with their respective graphenic layers parallel to their corresponding surfaces, can in turn assume an arrangement wherein said layers are parallel to each other, such that the attractive forces between said nanoparticles are substantially greater than that between graphenic nanoparticles with a structure that does not exhibit this parallelism.

Therefore, in order to obtain aggregates of graphenic nanoparticles with a smaller size or even isolated graphenic nanoparticles, it is necessary to overcome the van der Waals forces that hold together the graphenic nanomaterials in aggregates.

Thus, the amount of energy that must be supplied to separate the graphenic nanomaterials that form the aggregates will be proportional to the attractive force between the same.

This energy contribution necessary to deaggregate the aggregates of graphenic nanomaterials can be achieved through physical treatments.

On another hand, the amount of energy used in the treatments will determine their aggressiveness, so that treatments supplying large amounts of energy can have undesirable consequences in the structure of graphenic nanomaterials, degrading it and consequently damaging its properties.

This degradation implies a reduction in the number of graphenic carbons in the structure of the graphenic nanomaterials, potentially leading to their breakup into smaller fragments.

The degradation of the structure of the graphenic nanomaterials results in loss of their properties, and therefore of the properties of the dispersions containing said graphenic nanomaterials, used in subsequent applications in processes and products.

On another hand, a dispersion of sufficiently small aggregates allows obtaining a sufficiently uniform distribution at the time of use in subsequent applications in processes and products, transferring the properties of the graphenic nanomaterials to them.

Being able to obtain sufficiently uniform dispersions from aggregates of graphenic nanomaterials instead of completely deaggregated graphenic nanoparticles allows avoiding the use of highly energetic processes, thereby minimising the degradation of the graphenic nanomaterials to disperse.

Once the graphenic nanomaterials have been deaggregated it is necessary to maintain this deaggregated state at least during storage, transport and subsequent use in processes and products, thereby simplifying their handling.

When dispersed in a liquid medium, graphenic nanomaterials tend to settle due to gravity and approach one another until the attraction due to van der Waals forces is sufficiently high to cause reaggregation. Therefore, even in cases in which graphenic nanomaterials dispersions are obtained, these are typically not stable over time.

This reaggregation effect is promoted on one hand by the mutual affinity of graphenic nanomaterials, and on the other by their non-affinity to water resulting from the force of the graphenic layer structure.

The affinity of graphenic nanomaterials to water is enhanced by the presence of active carbons on their surface that can interact with any surrounding substance, such that with respect to water their behaviour is increasingly hydrophobic the lower the proportion of active carbons on the surface, and in general the higher the graphitisation index of the graphenic nanomaterials.

Increasing the presence of active carbons on the surface of the graphenic nanomaterials allows changing their behaviour, improving affinity to water and promoting mechanisms that reduce the effect of the van der Waals forces which favour reaggregation.

Thus, it is also necessary to act on the graphenic nanomaterials such that their affinity and capacity to interact with water is stronger than that between the particles of the graphenic nanomaterials. This allows preventing the reaggregation of the same and achieving a stable dispersion of the graphenic nanomaterials in said medium.

Therefore, the affinity between graphenic nanomaterials and water can be improved by increasing the contribution of the active carbons present in the structure of the graphenic nanomaterials which can interact with water.

For the contribution of said active carbons to be effective, these must be accessible. That is, it must be possible for said active carbons to contact and interact with the water so that, the higher the number of accessible active carbons, the greater their contribution.

Accessibility of water to the active carbons is in turn conditioned because the graphenic nanomaterials are in aggregate form.

While the active carbons on the surface of graphenic nanomaterials have easy access to the surrounding water, making their contribution significant, the remaining active carbons located inside the aggregates barely contribute.

To the extent that the shape of the aggregates can be changed to increase their outer surface, the number of active carbons that can interact with the surrounding water can be increased, therefore increasing their effect on the final properties of the dispersion.

On another hand, even if the active carbons are on the surface of the aggregate, they can be covered by other substances produced in the process of generating the graphenic nanomaterials, such as amorphous carbon, polyaromatic compounds, etc. that prevent their access to water.

Therefore, the affinity to water of the graphenic nanofilaments will depend on the number of active carbons present, as well as the accessibility of water to the same.

In light of the above, the object of the invention is a process for obtaining stable dispersions of graphenic nanomaterials and water, without altering the properties of the graphenic nanomaterials that are meant to be transferred to subsequent applications in processes and products. This object addresses a two-fold problem to solve.

The first of these consists in overcoming the forces of attraction that keep together the graphenic nanomaterials to form aggregates, in order to obtain aggregates of graphenic nanomaterials of a smaller size under a maximum value which enable a greater uniformity of the dispersion when they are used in the subsequent applications in processes and products.

The second problem involves preventing the graphenic nanomaterials from re-aggregating, maintaining a size under a maximum value, by reducing their mutual affinity and increasing the capacity of interaction between said graphenic nanomaterials and water through the active carbons, in order to guarantee the stability of the dispersion.

It is also convenient to solve this two-fold problem preventing the degradation of the graphenic nanomaterials, which is detrimental to the exceptional properties thereof and consequently that of the subsequent applications in processes and products, preventing the use of highly energetic processes, both physical and/or chemical.

In addition, it is convenient to solve the problem related to reaggregation of graphenic nanomaterials and their sedimentation, preventing the use of additional compounds such as dispersants or surfactants that can limit and/or harm the use of the dispersions obtained from them in subsequent processes or products in which they will be used.

### BACKGROUND OF THE INVENTION

The problem and difficulty of obtaining stable dispersions of graphenic nanomaterials in water by procedures wherein the graphenic nanomaterials are deaggregated, and with the use of substances that prevent their subsequent reaggregation are known in the prior art.

In the case of deaggregation of graphenic nanomaterials, it is known the use of physical and/or mechanical means to break the bonds that keep graphenic nanomaterials joined to form aggregates.

Some examples are patents ES2361763, WO2010/106287, US20100234477.

However, once the graphenic nanomaterials have been deaggregated and in order to prevent them from settling and reaggregating, all cited cases describe the use, for example, of dispersants, surfactants, or additional oxidising chemical compounds that modify the chemical structure of graphenic nanomaterials.

Specifically, patents ES2361763 and WO2010/106287 use dispersants to prevent the reaggregation of graphenic nanomaterials. Specifically, patent ES2361763 uses a clay as a dispersant element, and patent WO2010/106287 uses an anionic polymer as a dispersant element.

The use of dispersants, in addition to requiring the use of added compounds in the process for obtaining the dispersion, can limit and/or harm their use in the subsequent applications in processes or products.

As regards patent US20100234477, instead of using a dispersant to prevent the reaggregation of graphenic nanomaterials, an oxidation process is performed on the graphenic nanomaterials with nitric acid.

In said patent US20100234477 the use of an oxidation process favours the degradation of the graphenic nanomaterials, which is detrimental to the exceptional properties of the same and consequently of the subsequent applications in industrial processes and products.

Furthermore, document US7300958 is known in which an ultradispersion is obtained of individual graphenic nanoparticles in water, using only mechanical and physical means to perform the deaggregation of the graphenic nanomaterials and to prevent their reaggregation without requiring the use of added compounds.

In this case, the processes used comprise means that result in obtaining individual graphenic nanoparticles with a nanometric size. Said processes for obtaining individual graphenic nanoparticles are normally associated with the use of highly energetic processes.

In addition, to obtain individual graphenic nanoparticles from aggregates, patent US7300958 describes the use of a ball mill, wherein the balls have a diameter of 0.1 mm or less.

In this case, although it is possible to obtain a uniform and stable dispersion by obtaining individual graphenic nanoparticles, the properties of the same can be penalised because the milling operation used to pass from aggregates to individual graphenic nanoparticles can degrade the graphenic nanomaterials, particularly in the case that these have a nanofilament configuration with a high aspect ratio. It is also known EP2489632 belonging to the same applicant. It discloses a process for manufacturing graphene oxide nanoplatelets. The process is divided into two distinct phases, a first phase in which an intermediate material is obtained to be used as starting material in a subsequently second phase for obtaining the graphene oxide nanoplatelets. The intermediate material obtained in the first phase consisting of graphenic nanofilaments having a structure similar to the structure of the graphenic nanofilaments forming the aggregates of the present invention, that is a structure having a continuous ribbon of graphenic material stacked in a small number of graphenic layers, and spirally rolled around and along the main axis of said nanofilament.

### DESCRIPTION OF THE INVENTION

In view of the foregoing, the present invention relates to a process for obtaining stable dispersions of aggregates of graphenic nanofilaments in water, said process comprising the following stages;
a) arranging aggregates of graphenic nanofilaments wherein the structure of the graphenic nanofilaments comprises a continuous ribbon with five or fewer graphenic layers, spirally wound about and along the main axis "s" of each of said graphenic nanofilaments,
b) adding the aggregates of graphenic nanofilaments to an amount of water in order to obtain a first mixture of aggregates of graphenic nanofilaments and water wherein the percentage by weight of the aggregates of graphenic nanofilaments is from 1% to 5% with respect to the total weight of said first mixture,
c) stirring the first mixture of aggregates of graphenic nanofilaments and water, which comprises water recirculation due to the stirring in order to wet said aggregates of graphenic nanofilaments and obtain a second mixture of aggregates of graphenic nanofilaments and water, so that the size of the aggregates of graphenic nanofilaments responds to a distribution with a D09 percentile measured by the Dynamic Light Scattering method in an interval from 20 to 150 µm,
d) partial deaggregation and stretching of aggregates of graphenic nanofilaments of the second mixture of stage c) to obtain a first stable dispersion of modified aggregates of graphenic nanofilaments and water, by a recirculation process of said water and transport of the aggregates of graphenic nanofilaments of the second mixture, during which compression and shear loads are applied on the aggregates of graphenic nanofilaments to modify them, increasing their outer surface in contact with water by splitting them into smaller aggregates of graphenic nanofilaments, thereby increasing the number of aggregates of the second mixture, and by stretching them increasing their aspect ratio, such that the size of the modified aggregates of graphenic nanofilaments responds to a distribution with a D09 percentile measured by the Dynamic Light Scattering method is in an interval from 10 to 110 µm,
wherein the modified aggregates of graphenic nanofilaments of the first stable dispersion of modified aggregates of graphenic nanofilaments maintain a separation distance from one another constant in time, so that the percentage by weight of the modified aggregates of graphenic nanofilaments is less than 10% with respect to the total weight of the dispersion,
and wherein the graphenic nanofilaments maintain the structure of stage a), this is, a structure formed by a continuous ribbon with five or fewer graphenic layers, spirally wound about and along the main axis "s" of each of said graphenic nanofilaments.

The wetting process refers to that which makes the water access the surface of the aggregates of graphenic nanofilaments of the mixture until covering them, so that said aggregates do not accumulate on the surface of the water and thereby enable their transport in the next stage of the process.

The stretching process relates to one whereby there is a deformation of the aggregates of graphenic nanofilaments, resulting in an increase in its aspect ratio so that its outer surface in contact with the water is increased.

An essential feature of the invention is the use of a starting material with a special configuration defined in stage a) of the process, firstly in that it simplifies the deaggregation of the aggregates of graphenic nanofilaments with which the process of the invention starts, and secondly in that it favours the interaction of the aggregates of graphenic nanofilaments with water, preventing their reaggregation.

As explained above, the graphenic nanomaterials remain joined forming aggregates due to the action of van der Waals forces. The intensity of these forces depends on the relative arrangement of the graphenic layers of graphenic nanofilaments next to each other.

The graphenic nanofilaments of the invention have a spiral structure that extends along the axis of the graphenic nanofilaments, such that its graphenic layers are arranged forming an angle to said axis and consequently to the outer surface of the graphenic nanofilaments.

As a result, the graphenic layers of two nearby graphenic nanofilaments can never be parallel to each other, so that the attraction between said graphenic nanofilaments caused by van der Waals forces is less than that which would occur in other types of graphenic nanomaterials, such as in carbon nanotubes in which the graphenic layers are parallel to their respective main axes, so that the graphenic layers of the same can be placed parallel to each other to produce much stronger and more compact aggregates.

Consequently, the difficulty in separating two graphenic nanofilaments of the invention is less than the difficulty of separating for example two carbon nanotubes, with the result that in general the energy that must be added to perform this separation is also substantially less than that needed to separate said graphenic nanomaterials formed by nanofilaments with graphenic layers that are parallel to their surface.

In this way, the treatments used to obtain the energy allowing to separate the graphenic nanofilaments of the invention can be less aggressive.

The use of less-aggressive treatments implies that the structure of the graphenic nanofilaments of the invention is barely changed, therefore conserving the properties of the dispersions obtained in this manner, providing a suitable method for transferring said exceptional properties to subsequent applications in processes and products compatible with water.

The ease of separation of two graphenic nanofilaments is also possible in the case of other graphenic nanomaterials in which the graphenic layers are not parallel to the surface of the nanofilaments, such as for instance in structures of the stacked truncated cone type.

However, the intensity of the properties of this type of graphenic nanofilaments is much lower than that of the graphenic nanofilaments of the invention, as they are formed by stacks of portions of graphenic materials of a small size, instead of having a continuous structure of graphenic material between the ends of the graphenic nanofilaments.

On another hand, the special configuration of the graphenic nanofilaments of the invention also provides direct advantages regarding the affinity and capacity of interaction of the aggregates of said graphenic nanofilaments of the invention with water.

As explained before, the active carbons that form part of the graphenic nanofilaments allow modifying the behaviour and/or properties of the same. This means that although graphenic nanofilaments do not normally have affinity to water, they can have a certain capacity of interaction with water depending on the greater or lesser presence of active carbons on their surface.

As explained before, normally said active carbons are concentrated on the basal plane edges of the graphenic layers present in the graphenic nanomaterials.

In the case of the graphenic nanofilaments of the invention with a structure comprising a continuous ribbon with five or fewer graphenic layers, spirally wound around and along the main axis "s" of each of the graphenic nanofilaments, the basal plane edges extend along and occupy the entire surface, so that this entire surface can present active carbons and it is where these appear in greater number.

Consequently, the total number of basal plane edges present in the graphenic nanofilaments of the invention is much higher than that present, for example, in a carbon nanotube of the same length, in which the basal plane edges are concentrated only on its ends.

Since the active carbons are concentrated in the basal plane edges, the graphenic nanofilaments of the invention present a higher concentration of active carbons mainly on their surface, while on the inside they maintain high-quality and large graphenic layers, such that said graphenic nanofilaments represent an ideal starting material, with an affinity and capacity of interaction with water better than that of other graphenic nanomaterials, such as carbon nanotubes.

Consequently, the use of graphenic nanofilaments with the special configuration described as a starting material for the process of the invention allows separating the aggregates formed by the same and enhances their affinity to and capacity of interaction with water.

This simplifies the execution of a low-energy process for obtaining stable dispersions of graphenic nanofilaments aggregates in water, based on the use of only low-aggression physical treatments with a low energy contribution, which do not degrade the graphenic nanofilaments or their properties, and therefore do not affect their use in the subsequent applications in processes and products.

Said physical treatments used in the process of the invention are sufficient to, one one hand, deaggregate the graphenic nanofilaments, and on the other hand to ensure a uniform and stable dispersion of said aggregates in water.

In addition, the need to use additional substances such as surfactants, dispersants, reagents etc. to attain this two-fold objective is avoided.

Said additional substances, in addition to representing a new element to add and control during the process for obtaining the stable dispersions, can affect the properties of the graphenic nanofilaments, affecting their quality and the processes and products of the subsequent applications.

In addition, the invention relates to a process comprising two main stages, a stage c) consisting in stirring the first mixture of aggregates of graphenic nanofilaments and water, in order to wet the aggregates of graphenic nanofilaments, and a stage d) consisting in a partial deaggregation and stretching of the aggregates of graphenic nanofilaments of the second mixture obtained as a result of stage c), both with the aim of increasing the total outer surface in contact with water and facilitate access of water to the same and their interaction.

The stirring stage results in transporting the aggregates of graphenic nanofilaments in order to wet them, such that they are submerged in water, thereby preventing their accumulation on the surface.

This stage of the process allows preparing the aggregates of graphenic nanofilaments for the next stage d) of the process, thereby helping to minimise the energy contribution needed to perform it. In this way, said next stage d) is performed by a controlled supply of the strictly necessary energy, thereby preventing the degradation of the graphenic nanofilaments and therefore of their properties.

The next stage d) comprises a partial deaggregation and stretching of the aggregates of graphenic nanofilaments to increase the total outer surface of the aggregates and facilitate access of water to the same and their interaction.

The combination of the special configuration of the initial material and said partial deaggregation and stretching stage allows a stable dispersion of the aggregates in water with a controlled supply of energy that does not degrade the graphenic nanofilaments or their properties.

### BRIEF DESCRIPTION OF THE DRAWINGS

This specification is supplemented with a set of drawings illustrating the preferred embodiment, which are never intended to limit the invention.
Figure 1 is a schematic representation of the manufacturing process of the invention.
Figure 2 represents a graphenic nanofilament that forms part of the aggregates of graphenic nanofilaments of the invention, showing both its structure in a spirally wound continuous ribbon, and the arrangement of the active carbons in said structure, specifically their arrangement on the basal plane edges of said graphenic nanofilament.

### DETAILED DESCRIPTION OF THE PREFERRED EMBODIMENT OF THE INVENTION

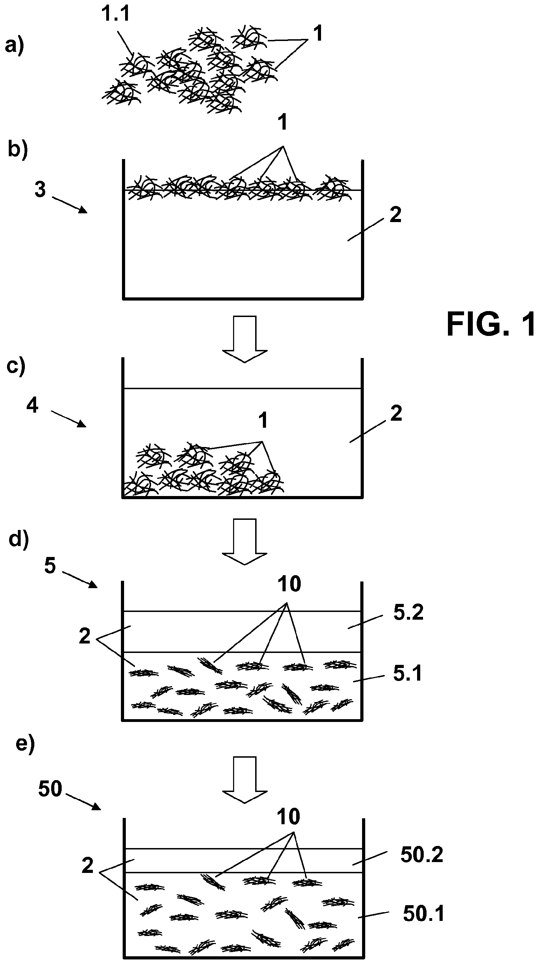

The process of the invention for obtaining stable dispersions (5,50) of modified aggregates (10) of graphenic nanofilaments (1.1) in water (2) as shown in figure 1, starts with stage a) for arranging the starting material.

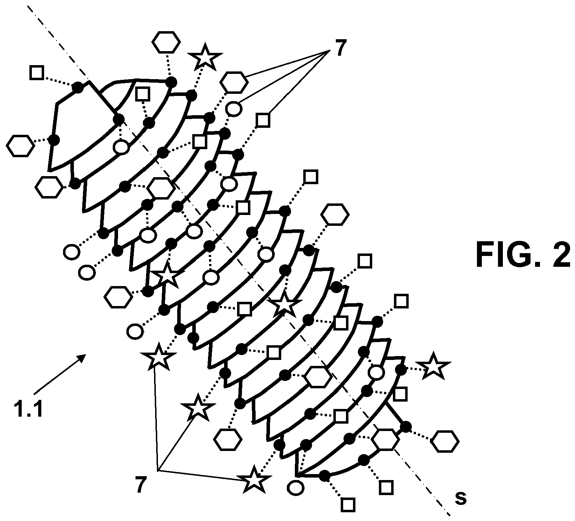

The material used as starting material for the invention consists in aggregates (1) of graphenic nanofilaments (1.1) wherein the structure of said graphenic nanofilaments (1.1), as shown in figure 2, comprises a continuous ribbon with five or fewer graphenic layers spirally wound about and along the main axis "s" of each of the graphenic nanofilaments, as described in patent EP1990449.

As explained above, the special configuration of the graphenic nanofilaments (1.1) of the invention means that the attractive forces that bind the graphenic nanofilaments (1.1) to form aggregates (1), the Van der Waals forces, are weaker than those that bind other quality graphenic nanomaterials, such as carbon nanotubes.

On another hand, this configuration results in a high presence of active carbons (7) on their surface compared, for example, to that of carbon nanotubes, resulting in an increased affinity and capacity of interaction of the graphenic nanofilaments (1.1) of the invention with water (2).

Some of the active carbons (7) that form part of the graphenic nanofilaments (1.1) can be covered by impurities, hindering their interaction with water (2), so that in order for said active carbons (7) to interact with the water (2), it is possible to optionally perform a cleaning treatment that involves subjecting the aggregates (1) of graphenic nanofilaments (1.1) of stage a), to a preliminary stage f) consisting in eliminating the polycyclic aromatic hydrocarbons and other volatile and semivolatile compounds deposited on their surface, by a heat treatment with mechanical stirring, such as that described in patent EP2107140.

This treatment is meant to eliminate the substances produced during the process for obtaining the graphenic nanofilaments (1.1) that cover the active carbons (7), preventing the latter from interacting with the surrounding water (2).

After arranging the starting material, the aggregates (1) of graphenic nanofilaments (1.1) of the invention, stage b) is performed, adding said aggregates (1) to an amount of water (2) to obtain a first mixture (3) of aggregates (1) of graphenic nanofilaments (1.1) and water (2).

The percentage by weight of the aggregates (1) of graphenic nanofilaments (1.1) of the first mixture (3) of aggregates (1) of graphenic nanofilaments (1.1) and water (2) lies from 1% to 5% with respect to the total of said first mixture (3).

In this stage, there is a part of the surface of the aggregates (1) of the graphenic nanofilaments (1.1) that is not in contact with the water (2), as can be seen in the schematic representation of stage b) in figure 1. This means that most of the aggregates (1) of graphenic nanofilaments (1.1) accumulate on the surface of the water (2).

For the water (2) to access the surface of said aggregates (1) and wet them to facilitate the next stage d) of the process of the invention, the first mixture (3) of aggregates (1) of graphenic nanofilaments (1.1) and water (2) are subjected to stage c), which consists in a stirring operation.

This stirring stage comprises recirculation of water (2) due to stirring, resulting in wetting the aggregates (1) of graphenic nanofilaments (1.1) in water (2).

In this way, the water (2) reaches the outer surface of the aggregates (1) of graphenic nanofilaments (1.1) and wets them, so that they are submerged in it, preventing the accumulation of the aggregates (1) of graphenic nanofilaments (1.1) on their surface and facilitating their transport by the water (2).

Since the object of stage c) is not to deaggregate the aggregates (1) of graphenic nanofilaments (1.1), this recirculation process does not require a high energy contribution, so that it allows controlling the energy supply and preventing a degradation of the graphenic nanofilaments (1.1) during the same, and therefore a degradation of their properties.

After subjecting the first mixture (3) to said stirring operation, a second mixture (4) of aggregates (1) of graphenic nanofilaments (1.1) and water (2) is obtained wherein the aggregates (1) of graphenic nanofilaments (1.1) are submerged in water (2).

As a result of the features of the aggregates 81) of graphenic nanofilaments (1.1) of the starting material of stage a) and the low energy contribution of stages b) and c), the size of the aggregates (1) of graphenic nanofilaments (1.1) after completing stage c) responds to a distribution with a D09 percentile measured by the Dynamic Light Scattering (DLS) method in a range from 20 to 150 µm.

As a result of the features of the aggregates (1) of graphenic nanofilaments (1.1) of the starting material of stage a), the pH of the second mixture (4) of aggregates (1) of graphenic nanofilaments (1.1) and water (2) is higher than 7. Said basic pH is due to the concentration of active carbons (7) of the graphenic nanofilaments (1.1) located on the surface of the aggregates (1) and their interaction with the surrounding water (2).

Similarly, due to the features of the aggregates (1) of graphenic nanofilaments (1.1) of the starting material of stages a), another feature of the second mixture (4) of aggregates (1) of graphenic nanofilaments (1.1) and water (2) is the tendency of its pH to increase, such that it becomes more alkaline, as it is diluted when more water (2) is added to the mixture (4), provided the percentage by weight of the aggregates of graphenic nanofilaments remains above 0.1% with respect to the total weight of the second mixture (4).

When this stage c) is completed, only some of the active carbons (7) of the graphenic nanofilaments (1.1) are accessible to water (2). These are those on the surface of the aggregates (1) of graphenic nanofilaments (1.1), while the remaining active carbons (7) located inside the aggregates (1), away from the outer surface, have a hard access to water (2).

For this reason, at the end of this stage c) there is no significant interaction between the active carbons of the graphenic nanofilaments (1.1) of the aggregates (1).

Due to the above, when the second mixture (4) of aggregates (1) of graphenic nanofilaments (1.1) and water (2) is allowed to rest, the aggregates (1) tend to settle due to gravity until they accumulate on the bottom part of the second mixture (4), coming in contact and aggregating again due to the effect of the Van der Waals forces, that is, the second mixture (4) of aggregates (1) of graphenic nanofilaments (1.1) and water (2) is not stable.

Stage c) of stirring can be performed, for example, by using stirrers of the type of blade stirrers, helical stirrers or turbine stirrers, or by using mixers or dispersers of different types.

The next stage d) is performed by a process of recirculating water (2) transporting the aggregates (1) of graphenic nanofilaments (1.1) of the second mixture (4), during which compression and shear loads are applied on said aggregates (1).

Since at the end of stage c) the aggregates (1) of graphenic nanofilaments (1.1) are submerged in water (2) and do not accumulate on the surface, the recirculation of the second mixture (4) causes the transport of the aggregates (1) of graphenic nanofilaments (1.1) needed to perform the next stage d) of the process.

Therefore, stage c) is particularly relevant, as it allows preparing the material for the next stage d), such that it also helps to minimise the energy contribution needed to perform it. In this way, the supply of energy can be controlled and reduced to that strictly necessary also in said stage d), allowing to prevent the degradation of the graphenic nanofilaments (1.1) and of their properties.

After preparing the starting material, the next stage d) is performed of partial deaggregation and stretching of the aggregates (1) of graphenic nanofilaments (1.1) of the second mixture (4) of stage c), to obtain a first stable dispersion (5) of modified aggregates (10) of graphenic nanofilaments (1.1) in water (2).

As a result of this stage d), the total outer surface of aggregates (1) of graphenic nanofilaments (1.1) in contact with water (2) is increased, in order to facilitate access of the water (2) to a greater number of active carbons (7) and thereby enhance the interaction of water (2) with the same.

Therefore, the main aim of this stage d) is to make accessible to the water (2) a greater number of the active carbons (7) that form part of the graphenic nanofilaments (1.1) comprising the aggregates (1).

This allows increasing the effect of the active carbons (7) resulting from said interaction with water (2) and thereby stabilise the resulting dispersion.

As stated above, this stage d) is performed by a process of recirculating water (2) transporting aggregates (1) of graphenic nanofilaments (1.1) of the second mixture (4) of graphenic nanofilaments (1.1) and water (2), during which compression and shear loads are applied on said aggregates (1) causing their partial deaggregation and stretching.

The partial deaggregation of the aggregates (1) of graphenic nanofilaments (1.1) of the second mixture (4) is performed to split said aggregates (1) of graphenic nanofilaments (1.1) by applying mechanical energy through shear loads, thereby increasing the number of aggregates (1) of the second mixture (4) and reducing the size of the same with respect to their size in stage c) to a value that responds to a distribution with a D09 percentile measured by the Dynamic Light Scattering (DLS) method included between 10 and 110 µm, thereby increasing their outer surface in contact with the water (2).

Stretching the aggregates (1) of graphenic nanofilaments (1.1) of the second mixture (4) is performed by applying mechanical energy through compression loads, in order to increase the aspect ratio of said aggregates (1) with respect to the aspect ratio that they had in the second mixture (4), and also to increase their outer surface in contact with the water (2).

Applying the shear loads to the second mixture (4) of aggregates (1) of graphenic nanofilaments (1.1) and water (2) with the special configuration of the invention, wherein the aggregates (1) of graphenic nanofilaments (1.1) can be easily deaggregated, together with the fact that it is not necessary to deaggregate them completely, means that the energy supplied is enough to overcome the Van der Waals forces without degrading the graphenic nanofilaments (1.1) or their properties.

Applying compression loads allows deforming the aggregates (1) of graphenic nanofilaments (1.1) in a gradual manner and therefore with a controlled supply of energy that also does not cause a degradation of the graphenic nanofilaments (1.1) in this stage d).

Due to the partial deaggregation and stretching of the aggregates (1) of graphenic nanofilaments (1.1), the number of active carbons (7) accessible to water (2) is increased, and therefore also their interaction with the water (2) and their effect on the resulting dispersion.

The recirculation of water (2) transporting the aggregates (1) of graphenic nanofilaments (1.1) of the second mixture (4) allows applying the compression and shear loads on the aggregates (1), and causes the interaction of the active carbons (7) with the water.

The interaction between the modified aggregates (10) of graphenic nanofilaments (1.1) and the water (2) carries with it an exchange of electric charges between the water (2) and the active carbons (7) of the graphenic nanofilaments (1.1), which causes an accumulation of electric charges on the surface of the modified aggregates (10) and the appearance of repulsion forces between them.

In addition, when a dispersion is at rest, gravity will cause settling of the aggregates of the graphenic nanomaterials, so that these will approach each other and reaggregate as they come close enough for Van der Waals forces to act.

The repulsive forces created between the modified aggregates (10) of the graphenic nanofilaments (1.1) as a result of stage d) are enough to maintain a minimum separation between the modified aggregates (10) of graphenic nanofilaments (1.1) near one another, beyond which they cannot come any closer to each other, so that the effect of the Van der Waals forces is negligible.

Since the separation between the modified aggregates (10) of graphenic nanofilaments (1.1) of the first stable dispersion (5) of modified aggregates (10) of graphenic nanofilaments (1.1) obtained as a result of stage d) remains stable in time above a specified value, so that the percentage by weight of the modified aggregates (10) of graphenic nanofilaments (1.1) is under 10% with respect to the total weight of said first stable dispersion (5), thus solving the problem of their reaggregation as well as obtaining a stable dispersion.

As shown in figure 1, which shows the first stable dispersion (5) obtained from stage d) of the process of the invention, once the first stable dispersion (5) is left at rest, gravity will tend to settle the modified aggregates (1) of graphenic nanofilaments (1.1) such that they will approach each other until reaching a minimum separation of the modified aggregates (10) of graphenic nanofilaments (1.1) nearby each other, beyond which they cannot come any closer, so that the effect of the Van der Waals forces remains sufficiently low to prevent reaggregation.

The result of this is the appearance of two differentiated phases, a first uniform and stable phase (5.1) of the first stable dispersion (5) in which the modified aggregates (10) of graphenic nanofilaments (1.1) are concentrated such that it does not exceed the maximum percentage by weight of the modified aggregates (10) of graphenic nanofilaments (1.1) are with respect to the total weight of said first stable dispersion (5), where said maximum weight percentage is 10%, and a second phase (5.2) of the first stable dispersion (5) placed above the first phase (5.1), formed by the excess water (2) from the first stable dispersion (5.1) that has not formed part of the first phase (5.1).

On another hand, similarly to the case of the second mixture (4) of aggregates (10) of graphenic nanofilaments (1.1) and water (2), the pH of the first stable dispersion (5) of modified aggregates (10) of graphenic nanofilaments (1.1) in water (2) is higher than 7. Said basic pH is due to the concentration of active carbons (7) of the graphenic nanofilaments (1.1) located on the surface of the modified aggregates (10) and their interaction with the surrounding water (2).

Similarly, another feature of the first stable dispersion (5) of modified aggregates (10) of graphenic nanofilaments (1.1) obtained in stage d), is the tendency of the pH of the same to increase, making it increasingly alkaline, as it is diluted by adding water (2) to it, provided the percentage by weight of modified aggregates (10) of graphenic nanofilaments (1.1) remains above 0.1% with respect to the total weight of the first stable dispersion (5).

This behaviour of the first stable dispersion (5) of modified aggregates (10) of graphenic nanofilaments (1.1), analogous to that of the second mixture (3) of aggregates (1) of graphenic nanofilaments (1.1) and water (2), is a consequence of the distribution of active carbons (7) specific to the structure of the graphenic nanofilaments (1.1) of the invention, which has been maintained throughout the entire process for obtaining the dispersion by controlling the energy supply that minimises degradation of the graphenic nanofilaments (1.1).

This milling stage d) can be performed, for example, by using a ball mill, a mortar mill, a disc mill or a basket mill.

Preferably, stage d) is performed using a ball mill in which is recirculated the water (2) of the second mixture (3) to transport the aggregates (1) of graphenic nanofilaments (1.1) of the second mixture (4) to the balls that generate the compression and shear loads on them.

In this case, the size of the modified aggregates (10) obtained will be conditioned by the diameter of the balls used, such that very small ball diameters result in nanometric size particles which no longer correspond to aggregates, instead being fragments of nanoparticles, that is, nanoparticles that lead to dispersions with properties that are worse and normally unstable.

Thus, preferably, the diameter of the balls will be greater than 0.3 mm to ensure that modified aggregates (10) are obtained of graphenic nanofilaments (1.1) sufficiently small to produce a uniform dispersion, but sufficiently large to prevent the degradation of the graphenic nanofilaments (1.1) and consequently prevent the degradation of their properties.

Optionally, the process of the invention can comprise, after stage d), a stage e) of stirring the first stable dispersion (5) of modified aggregates (10) of graphenic nanofilaments (1.1) and water (2) to obtain a second stable dispersion (50) of modified aggregates (10) of graphenic nanofilaments (1.1) and water (2), in order to increase the interaction between the active carbons (7) of the modified aggregates (10) of graphenic nanofilaments (1.1) and water (2), increase the exchange of charges between said active carbons (7) and water (2), and thereby achieve a greater repulsion and greater separation distance between the modified aggregates (10) of graphenic nanofilaments (1.1) that allow their use in the subsequent applications in processes and products.

In this case, the separation distance between the modified aggregates (10) of graphenic nanofilaments (1.1) of the second stable dispersion (50) is greater than the separation distance between aggregates of the first stable dispersion (5) obtained from stage d), so that the percentage by weight of the modified aggregates (10) of graphenic nanofilaments (1.1) is less than 6% of the total weight of said second stable dispersion (50).

In the same way as for the first stable dispersion (5), the effect of gravity as shown in the representation of the second stable dispersion (50) obtained from stage e) results in the appearance of two differentiated phases, a first uniform and stable phase (50.1) of the second stable dispersion (50) in which the modified aggregates (10) of graphenic nanofilaments (1.1) are concentrated such that the concentration is lower than that corresponding to the first phase (5.1) of the first stable dispersion (5), without exceeding the maximum percentage by weight of the modified aggregates (10) of graphenic nanofilaments (1.1) with respect to the total weight of said first stable dispersion (50), wherein said maximum percentage by weight is 6%, and a second phase (50.2) of the second stable dispersion (50) placed above the first phase (50.1), formed by the excess water (2) from the second stable dispersion (50.1) that has not formed part of the first phase (50.1).

As a result of this stage e), the second stable dispersion (50) of modified aggregates (10) of graphenic nanofilaments (1.1) obtained comprises modified aggregates (10) with a size corresponding to a distribution with a D09 percentage measured by the Dynamic Light Scattering (DLS) method in a range from 10 to 110 µm and graphenic nanofilaments (1.1) having a structure formed by a continuous ribbon with five or fewer graphenic layers spirally wound about and along the main axis "s" of each of the graphenic nanofilaments (1.1).

This stirring stage e) can be performed, for example, by using dispersors of cowless dispersors type or rotor-stator dispersors type.

Stage e), as the previous stages, is carried out controlling the energy supplied in it, such that the properties of the graphenic nanofilaments (1.1) remain intact and can thus be transferred to the subsequent applications in processes and products.

The present invention also relates to the product obtained from the process of the invention described above, that is the stable dispersions (5, 50) of aggregates (10) of graphenic nanofilaments (1.1) in water (2).

Therefore, the invention relates to a stable dispersion (5) of aggregates (10) of graphenic nanofilaments (1.1) in water (2) in which the percentage by weight of the modified aggregates (10) of graphenic nanofilaments (1.1) is less than 10% with respect to the total weight of the stable dispersion (5).

Preferably, the invention relates to a stable dispersion (50) of modified aggregates (10) of graphenic nanofilaments (1.1) in water (2) in which the percentage by weight of the modified aggregates (10) of graphenic nanofilaments (1.1) is less than 6% with respect to the total weight of the stable dispersion (50).

In addition, said stable dispersion (5, 50) of modified aggregates (10) of graphenic nanofilaments (1.1) in water (2) comprises modified aggregates (10) with a size corresponding to a distribution with a D09 percentage measured by the Dynamic Light Scattering (DLS) method in a range from 10 to 110 µm and graphenic nanofilaments (1.1) having a structure formed by a continuous ribbon with five or fewer graphenic layers spirally wound about and along the main axis "s" of each of the graphenic nanofilaments (1.1).

On another hand, the pH of the stable dispersion (5, 50) of modified aggregates (10) of nanofilaments (1.1) and water (2) is greater than 7.

Another feature of said stable dispersion (5, 50) of modified aggregates (10) of graphenic nanofilaments (1.1) and water (2) is the tendency of the pH of the same to increase, making it increasingly alkaline as it is diluted by adding water (2) to the same (5, 50), provided the percentage by weight of the modified aggregates (10) of graphenic nanofilaments (1.1) remains above 0.1% with respect to the total weight of the stable dispersion (5, 50).

## Claims

1. Process for obtaining uniform dispersions of aggregates of graphenic nanofilaments in water, said process comprising the following stages:
a) arranging aggregates (1) of graphenic nanofilaments (1.1) wherein the structure of the graphenic nanofilaments comprises a continuous ribbon with five or fewer graphenic layers, spirally wound about and along the main axis s of each of said graphenic nanofilaments (1.1),
b) adding the aggregates (1) of graphenic nanofilaments (1.1) to an amount of water (2) in order to obtain a first mixture (3) of aggregates (1) of graphenic nanofilaments (1.1) and water (2) wherein the percentage by weight of the aggregates (1) of graphenic nanofilaments (1.1) is from 1% to 5% with respect to the total weight of said first mixture (3),
c) stirring the first mixture (3) of aggregates (1) of graphenic nanofilaments (1.1) and water (2), which comprises recirculation of the water (2) by stirring in order to wet said aggregates (1) of graphenic nanofilaments (1.1) and obtain a second mixture (4) of aggregates (1) of graphenic nanofilaments (1.1) and water (2), so that the size of the aggregates (1) of graphenic nanofilaments (1.1) responds to a distribution with a D09 percentile measured by the Dynamic Light Scattering method in an interval from 20 to 150 µm,
d) partial deaggregation and stretching of aggregates (1) of graphenic nanofilaments (1.1) of the second mixture (4) of stage c) to obtain a first stable dispersion (5) of modified aggregates (10) of graphenic nanofilaments (1.1) and water (2), by a recirculation process of said water (2) and transport of the aggregates (1) of graphenic nanofilaments (1.1) of the second mixture (4), during which compression and shear loads are applied on the aggregates (1) of graphenic nanofilaments (1.1) to modify them, increasing their outer surface in contact with the water (2) by splitting them into smaller aggregates (10) of graphenic nanofilaments (1.1), thereby increasing the number of aggregates of the second mixture, and by stretching them increasing their aspect ratio, such that the size of the modified aggregates (10) of graphenic nanofilaments (1.1) responds to a distribution with a D09 percentile measured by the Dynamic Light Scattering method is in an interval from 10 to 110 µm,
wherein the modified aggregates (10) of graphenic nanofilaments (1.1) of the first stable dispersion (5) of modified aggregates (10) of graphenic nanofilaments (1.1) maintain a separation distance from one another constant in time, so that the percentage by weight of the modified aggregates (10) of graphenic nanofilaments (1.1) is less than 10% with respect to the total weight of the first stable dispersion (5),
and wherein the graphenic nanofilaments (1.1) maintain the structure of stage a), this is, a structure formed by a continuous ribbon with five or fewer graphenic layers, spirally wound about and along the main axis s of each of said graphenic nanofilaments (1.1).

2. Process for obtaining stable dispersions of aggregates of graphenic nanofilaments in water according to claim 1, wherein the aggregates (1) of graphenic nanofilaments (1.1) of stage a) are subjected to a previous stage f) consisting in eliminating the polycyclic aromatic hydrocarbons and other volatile and semivolatile compounds deposited on their surface by a heat treatment with mechanical stirring.

3. Process for obtaining stable dispersions of aggregates of graphenic nanofilaments in water according to claim 1, which also comprises a stage e) subsequent to stage d), that comprises stirring the first stable dispersion (5) of modified aggregates (10) of graphenic nanofilaments (1.1) and water (2), to obtain a second stable dispersion (50) of modified aggregates (10) of graphenic nanofilaments (1.1) in water (2) wherein the percentage by weight of the modified aggregates (10) of graphenic nanofilaments (1.1) is less than 6% with respect to the total weight of the second stable dispersion (50),
wherein the size of said modified aggregates (10) corresponds to a distribution with a D09 percentile measured by the Dynamic Light Scattering method in a range from 10 to 110 µm,
and wherein the graphenic nanofilaments (1.1) maintain the structure of stage a), this is, a structure formed by a continuous ribbon with five or fewer graphenic layers, spirally wound about and along the main axis s of each of said graphenic nanofilaments (1.1).

4. Process for obtaining stable dispersions of aggregates of graphenic nanofilaments in water according to claim 1, wherein stage d) is performed using a ball mill, in which the balls generate the compression and shear loads on the aggregates (1) of graphenic nanofilaments (1.1).

5. Process for obtaining stable dispersions of aggregates of graphenic nanofilaments in water according to claim 1, wherein both the pH of the second mixture (4) of aggregates (1) of graphenic nanofilaments (1.1) and water (2) and the pH of the first stable dispersion (5) of modified aggregates (10) of graphenic nanofilaments (1.1) in water (2) is higher than 7.

6. Process for obtaining stable dispersions of aggregates of graphenic nanofilaments in water according to claim 5 wherein the tendency of the pH of either the second mixture (4) of aggregates (1) of graphenic nanofilaments (1.1) and water (2) or instead the first stable dispersion (5) of modified aggregates (10) of graphenic nanofilaments (1.1) in water (2), is to increase as it is diluted by adding more water (2) to said mixture (4, 5), provided the percentage by weight of aggregates (1) of graphenic nanofilaments in the case of the second mixture (4) or modified aggregates (10) of graphenic nanofilaments (1.1) in the case of the first stable dispersion (5) remains above 0.1% with respect to the total of the second mixture (4) or the first stable dispersion (5) respectively.

7. Stable dispersion of aggregates of graphenic nanofilaments in water, **characterised in that** it
comprises a stable dispersion (5, 50) of aggregates (10) of graphenic nanofilaments (1.1) in water (2) in which the percentage by weight of the aggregates (10) of graphenic nanofilaments (1.1) is less than 10% with respect to the total weight of the stable dispersion (5, 50),
wherein said stable dispersion (5) of aggregates (10) of graphenic nanofilaments (1.1) in water (2) comprises aggregates (10) with a size corresponding to a distribution with a D09 percentile measured by the Dynamic Light Scattering (DLS) method in a range from 10 to 110 µm,
and wherein the graphenic nanofilaments (1.1) have a structure formed by a continuous ribbon with five or fewer graphenic layers, spirally wound about and along the main axis s of each of said graphenic nanofilaments (1.1).

8. Stable dispersion of aggregates of graphenic nanofilaments in water according to claim 7, wherein the percentage by weight of the aggregates (10) of graphenic nanofilaments (1.1) is less than 6% with respect to the total weight of the stable dispersion (5, 50).

9. Stable dispersion of aggregates of graphenic nanofilaments in water according to claim 7, wherein the pH of the stable dispersion (5, 50) of aggregates (10) of graphenic nanofilaments (1.1) in water (2) is greater than 7.

10. Stable dispersion of aggregates of graphenic nanofilaments in water according to claim 9 wherein the tendency of the pH of the stable dispersion (5, 50) of aggregates (10) of graphenic nanofilaments (1.1) in water (2) is to increase as it is diluted by adding more water the the same (5, 50), provided the percentage by weight of aggregates (10) of graphenic nanofilaments (1.1) remains above 0.1% with respect to the total of the stable dispersion (5, 50).

## Patentansprüche

1. Verfahren zum Erhalten einer gleichmäßigen Dispersion von Aggregaten graphenischer Nanofilamente in Wasser, wobei das Verfahren die folgenden Stufen umfasst:
a) Anordnen von Aggregaten (1) graphenischer Nanofilamente (1.1), wobei die Struktur der graphenischen Nanofilamente ein durchgehendes Band mit fünf oder weniger Schichten umfasst, das spiralförmig um die und entlang der Hauptachse s jeder der graphenischen Nanofilamente (1.1) gewunden ist,
b) Zugeben der Aggregate (1) graphenischer Nanofilamente (1.1) zu einer Menge von Wasser (2), um ein erstes Gemisch (3) aus Aggregaten (1) graphenischer Nanofilamente (1.1) und Wasser (2) zu erhalten, wobei der Gewichtsanteil der Aggregate (1) graphenischer Nanofilamente (1.1) von 1 % bis 5 %, bezogen auf das Gesamtgewicht des ersten Gemischs (3), beträgt,
c) Rühren des ersten Gemischs (3) aus Aggregaten (1) graphenischer Nanofilamente (1.1) und Wasser (2), das das Rezirkulieren von Wasser (2) durch Rühren umfasst, um die Aggregate (1) graphenischer Nanofilamente (1.1) zu benetzen und ein zweites Gemisch (4) aus Aggregaten (1) graphenischer Nanofilamente (1.1) und Wasser (2) zu erhalten, so dass die Größe der Aggregate (1) graphenischer Nanofilamente (1.1) einer Verteilung mit einem D09-Perzentil, die durch das dynamische Lichtstreuungsverfahren in einem Bereich von 20 bis 150 µm gemessen wird, entspricht,
d) teilweise Desaggregation und Streckung von Aggregaten (1) graphenischer Nanofilamente (1.1) des zweiten Gemischs(4) von Stufe c), um eine erste stabile Dispersion (5) aus modifizierten Aggregaten (10) graphenischer Nanofilamente (1.1) und Wasser (2) durch einen Rezirkulationsvorgang des Wassers (2) zu erhalten, und Transport der Aggregate (1) graphenischer Nanofilamente (1.1) des zweiten Gemischs (4), wobei währenddessen Druck- und Scherbelastungen auf die Aggregate (1) graphenischer Nanofilamente (1.1) angewandt werden, um diese zu modifizieren, wobei ihre äußere Oberfläche in Kontakt mit dem Wasser (2) durch deren Aufspaltung in kleinere Aggregate (10) graphenischer Nanofilamente (1.1) vergrößert wird, wodurch die Anzahl der Aggregate des zweiten Gemischs erhöht wird, und durch deren Streckung, um ihr Aspektverhältnis zu erhöhen, so dass die Größe der modifizierten Aggregate (10) graphenischer Nanofilamente (1.1) einer Verteilung mit einem D09-Perzentil, die durch das dynamische Lichtstreuungsverfahren in einem Bereich von 10 bis 110 µm gemessen wird, entspricht,
wobei die modifizierten Aggregate (10) graphenischer Nanofilamente (1.1) der ersten stabilen Dispersion (5) aus modifizierten Aggregaten (10) graphenischer Nanofilamente (1.1) einen zeitlich konstanten Abstand zueinander aufweisen, so dass der Gewichtsanteil der modifizierten Aggregate (10) graphenischer Nanofilamente (1.1) weniger als 10 %, bezogen auf das Gesamtgewicht der ersten stabilen Dispersion (5), beträgt,
und wobei die graphenischen Nanofilamente (1.1) die Struktur von Stufe a) beibehalten, das heißt eine Struktur, die durch ein durchgehendes Band mit fünf oder weniger Schichten gebildet ist, das spiralförmig um die und entlang der Hauptachse s jeder der graphenischen Nanofilamente (1.1) gewunden ist.

2. Verfahren zum Erhalten einer stabilen Dispersion aus Aggregaten graphenischer Nanofilamente in Wasser nach Anspruch 1, wobei die Aggregate (1) graphenischer Nanofilamente (1.1) von Stufe a) einer vorhergehenden Stufe f) unterzogen werden, die darin besteht, die polycyclischen aromatischen Kohlenwasserstoffe und andere flüchtige und halbflüchtige Verbindungen, die auf deren Oberfläche abgeschieden werden, durch Wärmebehandlung mit mechanischem Rühren zu entfernen.

3. Verfahren zum Erhalten einer stabilen Dispersion aus Aggregaten graphenischer Nanofilamente in Wasser nach Anspruch 1, das auch eine auf die Stufe d) nachfolgende Stufe e) umfasst, die auch das Rühren der ersten stabilen Dispersion (5) aus modifizierten Aggregaten (10) graphenischer Nanofilamente (1.1) und Wasser (2) umfasst, um eine zweite stabile Dispersion (50) aus modifizierten Aggregaten (10) graphenischer Nanofilamente (1.1) in Wasser (2) zu erhalten, wobei der Gewichtsanteil der modifizierten Aggregate (10) graphenischer Nanofilamente (1.1) weniger als 6 %, bezogen auf das Gesamtgewicht der zweiten stabilen Dispersion (50), beträgt,
wobei die Größe der modifizierten Aggregate (10) einer Verteilung mit einem D09-Perzentil, die durch das dynamische Lichtstreuungsverfahren in einem Bereich von 10 bis 110 µm gemessen wird, entspricht,
und wobei die graphenischen Nanofilamente (1.1) die Struktur von Stufe a) beibehalten, das heißt eine Struktur, die durch ein durchgehendes Band mit fünf oder weniger Schichten gebildet ist, das spiralförmig um die und entlang der Hauptachse s jeder der graphenischen Nanofilamente (1.1) gewunden ist.

4. Verfahren zum Erhalten einer stabilen Dispersion aus Aggregaten graphenischer Nanofilamente in Wasser nach Anspruch 1, wobei Stufe d) unter Verwendung einer Kugelmühle durchgeführt wird, in der die Kugeln die Druck- und Scherbelastungen auf die Aggregate (1) graphenischer Nanofilamente (1.1) erzeugen.

5. Verfahren zum Erhalten einer stabilen Dispersion aus Aggregaten graphenischer Nanofilamente in Wasser nach Anspruch 1, wobei sowohl der pH des zweiten Gemischs (4) aus Aggregaten (1) graphenischer Nanofilamente (1.1) und Wasser (2) als auch der pH der ersten stabilen Dispersion (5) aus modifizierten Aggregaten (10) graphenischer Nanofilamente (1.1) in Wasser (2) höher ist als 7.

6. Verfahren zum Erhalten einer stabilen Dispersion von Aggregaten graphenischer Nanofilamente in Wasser nach Anspruch 5, wobei die Tendenz des pH entweder des zweiten Gemischs (4) aus Aggregaten (1) graphenischer Nanofilamente (1.1) und Wasser (2) oder stattdessen der ersten stabilen Dispersion (5) aus modifizierten Aggregaten (10) graphenischer Nanofilamente (1.1) in Wasser (2) dahin geht, dass er sich erhöht, wenn das Gemisch (4, 5) durch Zugeben von mehr Wasser zu diesem verdünnt wird, vorausgesetzt, dass der Gewichtsanteil der Aggregate (1) graphenischer Nanofilamente im Fall des zweiten Gemischs (4) oder der modifizierten Aggregate (10) graphenischer Nanofilamente (1.1) im Fall der ersten stabilen Dispersion (5) über 0,1 %, bezogen auf die Gesamtmenge des zweiten Gemischs (4) bzw. der ersten stabilen Dispersion (5), bleibt.

7. Stabile Dispersion aus Aggregaten graphenischer Nanofilamente in Wasser, **dadurch gekennzeichnet, dass** sie
eine stabile Dispersion (5, 50) aus Aggregaten (10) graphenischer Nanofilamente (1.1) in Wasser (2) umfasst, in der der Gewichtsanteil der Aggregate (10) graphenischer Nanofilamente (1.1) weniger als 10 %, bezogen auf das Gesamtgewicht der stabilen Dispersion (5, 50), beträgt,
wobei die stabile Dispersion (5) aus Aggregaten (10) graphenischer Nanofilamente (1.1) in Wasser (2) Aggregate (10) mit einer Größe umfasst, die einer Verteilung mit einem D09-Perzentil, die durch das dynamische Lichtstreuungsverfahren (DSL, von engl. Dynamic Light Scattering) in einem Bereich von 10 bis 110 µm gemessen wird, entspricht,
und wobei die graphenischen Nanofilamente (1.1) eine Struktur aufweisen, die durch ein durchgehendes Band mit fünf oder weniger Schichten gebildet ist, das spiralförmig um die und entlang der Hauptachse s jeder der graphenischen Nanofilamente (1.1) gewunden ist.

8. Stabile Dispersion aus Aggregaten graphenischer Nanofilamente in Wasser nach Anspruch 7, wobei der Gewichtsanteil der Aggregate (10) graphenischer Nanofilamente (1.1) weniger als 6 %, bezogen auf das Gesamtgewicht der stabilen Dispersion (5, 50), beträgt.

9. Stabile Dispersion aus Aggregaten graphenischer Nanofilamente in Wasser nach Anspruch 7, wobei der pH der stabilen Dispersion (5, 50) aus Aggregaten (10) graphenischer Nanofilamente (1.1) in Wasser (2) höher ist als 7.

10. Stabile Dispersion aus Aggregaten graphenischer Nanofilamente in Wasser nach Anspruch 9, wobei die Tendenz des pH der stabilen Dispersion (5, 50) aus Aggregaten (1) graphenischer Nanofilamente (1.1) in Wasser (2) dahin geht, dass er sich erhöht, wenn sie durch Zugeben von mehr Wasser zu derselben verdünnt wird, vorausgesetzt, dass der Gewichtsanteil der Aggregate (10) graphenischer Nanofilamente über 0,1 %, bezogen auf die Gesamtmenge der stabilen Dispersion (5, 50), bleibt.

## Revendications

1. Procédé permettant d'obtenir des dispersions uniformes d'agrégats de nanofilaments graphéniques dans de l'eau, ledit procédé comportant les étapes suivantes :
a) agencer des agrégats (1) de nanofilaments graphéniques (1.1), la structure des nanofilaments graphéniques comprenant un ruban continu possédant cinq couches graphéniques ou moins, enroulé en spirale autour et le long de l'axe principal s de chacun desdits nanofilaments graphéniques (1.1),
b) ajouter les agrégats (1) de nanofilaments graphéniques (1.1) à une quantité d'eau (2) dans le but d'obtenir un premier mélange (3) d'agrégats (1) de nanofilaments graphéniques (1.1) et d'eau (2), le pourcentage en poids des agrégats (1) des nanofilaments graphéniques (1.1) allant de 1 % à 5 % par rapport au poids total dudit premier mélange (3),
c) agiter le premier mélange (3) d'agrégats (1) de nanofilaments graphéniques (1.1) et d'eau (2), qui consiste à remettre en circulation l'eau (2) par agitation dans le but de mouiller lesdits agrégats (1) de nanofilaments graphéniques (1.1) et d'obtenir un second mélange (4) d'agrégats (1) de nanofilaments graphéniques (1.1) et d'eau (2), de sorte que la taille des agrégats (1) de nanofilaments graphéniques (1.1) corresponde à une distribution avec un percentile D09 mesuré par le procédé de diffusion dynamique de la lumière dans un intervalle allant de 20 à 150 µm,
d) réaliser la désagrégation partielle et l'étirement d'agrégats (1) de nanofilaments graphéniques (1.1) du second mélange (4) de l'étape c) afin d'obtenir une première dispersion stable (5) d'agrégats (10) modifiés de nanofilaments graphéniques (1.1) et d'eau (2), par un processus de remise en circulation de ladite eau (2) et le transport des agrégats (1) de nanofilaments graphéniques (1.1) du second mélange (4), pendant lequel des charges de compression et de cisaillement sont appliquées sur les agrégats (1) de nanofilaments graphéniques (1.1) pour les modifier, ce qui augmente leur surface externe en contact avec l'eau (2) en les divisant en agrégats (10) plus petits de nanofilaments graphéniques (1.1), ce qui permet d'augmenter le nombre d'agrégats du second mélange, et en les étirant ce qui augmente leur rapport d'aspect, de sorte que la taille des agrégats (10) modifiés de nanofilaments graphéniques (1.1) corresponde à une distribution avec un percentile D09 mesuré par le procédé de diffusion dynamique de la lumière dans un intervalle allant de 10 à 110 µm,
dans lequel les agrégats (10) modifiés de nanofilaments graphéniques (1.1) de la première dispersion stable (5) d'agrégats (10) modifiés de nanofilaments graphéniques (1.1) maintiennent une distance de séparation entre eux constante dans le temps, de sorte que le pourcentage en poids des agrégats modifiés (10) de nanofilaments graphéniques (1.1) soit inférieur à 10 % par rapport au poids total de la première dispersion stable (5),
et dans lequel les nanofilaments graphéniques (1.1) maintiennent la structure de l'étape a), à savoir, une structure formée par un ruban continu ayant cinq couches graphéniques ou moins, enroulé en spirale autour et le long de l'axe principal s de chacun desdits nanofilaments graphéniques (1.1).

2. Procédé permettant d'obtenir des dispersions stables d'agrégats de nanofilaments graphéniques dans de l'eau selon la revendication 1, dans lequel les agrégats (1) de nanofilaments graphéniques (1.1) de l'étape a) sont soumis à une étape f) précédente consistant à éliminer les hydrocarbures aromatiques polycycliques et d'autres composés volatils et semi-volatils déposés à leur surface par un traitement thermique avec agitation mécanique.

3. Procédé permettant d'obtenir des dispersions stables d'agrégats de nanofilaments graphéniques dans de l'eau selon la revendication 1, qui comprend également une étape e) successive à l'étape d), qui consiste à agiter la première dispersion stable (5) d'agrégats (10) modifiés de nanofilaments graphéniques (1.1) et d'eau (2), afin d'obtenir une seconde dispersion stable (50) d'agrégats (10) modifiés de nanofilaments graphéniques (1.1) dans de l'eau (2), le pourcentage en poids des agrégats (10) modifiés de nanofilaments graphéniques (1.1) étant inférieur à 6 % par rapport au poids total de la seconde dispersion stable (50),
dans lequel la taille desdits agrégats (10) modifiés correspond à une distribution avec un percentile D09 mesuré par le procédé de diffusion dynamique de la lumière dans une plage allant de 10 à 110 µm,
et dans lequel les nanofilaments graphéniques (1.1) maintiennent la structure de l'étape a), à savoir, une structure formée par un ruban continu ayant cinq couches graphéniques ou moins, enroulé en spirale autour et le long de l'axe principal s de chacun desdits nanofilaments graphéniques (1.1).

4. Procédé permettant d'obtenir des dispersions stables d'agrégats de nanofilaments graphéniques dans de l'eau selon la revendication 1, dans lequel l'étape d) est réalisée à l'aide d'un broyeur à billes, dans lequel les billes génèrent les charges de compression et de cisaillement sur les agrégats (1) de nanofilaments graphéniques (1.1).

5. Procédé permettant d'obtenir des dispersions stables d'agrégats de nanofilaments graphéniques dans de l'eau selon la revendication 1, dans lequel à la fois le pH du second mélange (4) d'agrégats (1) de nanofilaments graphéniques (1.1) et d'eau (2) et le pH de la première dispersion stable (5) d'agrégats (10) modifiés de nanofilaments graphéniques (1.1) dans l'eau (2) sont supérieurs à 7.

6. Procédé permettant d'obtenir des dispersions stables d'agrégats de nanofilaments graphéniques dans de l'eau selon la revendication 5, dans lequel la tendance du pH soit du second mélange (4) d'agrégats (1) de nanofilaments graphéniques (1.1) et d'eau (2), soit de la première dispersion stable (5) d'agrégats (10) modifiés de nanofilaments graphéniques (1.1) dans de l'eau (2), est d'augmenter à mesure qu'il est dilué en ajoutant davantage d'eau (2) audit mélange (4, 5), à condition que le pourcentage en poids des agrégats (1) de nanofilaments graphéniques dans le cas du second mélange (4) ou des agrégats (10) modifiés des nanofilaments graphéniques (1.1) dans le cas de la première dispersion stable (5) reste supérieur à 0,1 % par rapport au total du second mélange (4) ou de la première dispersion stable (5) respectivement.

7. Dispersion stable d'agrégats de nanofilaments graphéniques dans de l'eau, **caractérisée en ce qu'**elle
comprend une dispersion stable (5, 50) d'agrégats (10) de nanofilaments graphéniques (1.1) dans de l'eau (2) dans laquelle le pourcentage en poids des agrégats (10) de nanofilaments graphéniques (1.1) est inférieur à 10 % par rapport au poids total de la dispersion stable (5, 50),
ladite dispersion stable (5) d'agrégats (10) de nanofilaments graphéniques (1.1) dans de l'eau (2) comprenant des agrégats (10) ayant une taille correspondant à une distribution avec un percentile D09 mesuré par le procédé de diffusion dynamique de la lumière (DLS) dans une plage allant de 10 à 110 µm,
et les nanofilaments graphéniques (1.1) ayant une structure formée par un ruban continu ayant cinq couches graphéniques ou moins, enroulé en spirale autour et le long de l'axe principal s de chacun desdits nanofilaments graphéniques (1.1).

8. Dispersion stable d'agrégats de nanofilaments graphéniques dans de l'eau selon la revendication 7, dans lequel le pourcentage en poids des agrégats (10) de nanofilaments graphéniques (1.1) est inférieur à 6 % par rapport au poids total de la dispersion stable (5, 50).

9. Dispersion stable d'agrégats de nanofilaments graphéniques dans de l'eau selon la revendication 7, dans lequel le pH de la dispersion stable (5, 50) d'agrégats (10) de nanofilaments graphéniques (1.1) dans de l'eau (2) est supérieur à 7.

10. Dispersion stable d'agrégats de nanofilaments graphéniques dans de l'eau selon la revendication 9, dans lequel la tendance du pH de la dispersion stable (5, 50) d'agrégats (10) de nanofilaments graphéniques (1.1) dans de l'eau (2) doit augmenter à mesure qu'elle est diluée en ajoutant davantage d'eau à celle-ci (5, 50), à condition que le pourcentage en poids des agrégats (10) de nanofilaments graphéniques (1.1) reste au-dessus de 0,1 % par rapport au total de la dispersion stable (5, 50).
